Europäisches Patentamt

European Patent Office

Office européen des brevets

(11) Publication number: 0 341 946
A2

# EUROPEAN PATENT APPLICATION

(21) Application number: 89304618.5

(51) Int. Cl.4: G03B 17/24

(22) Date of filing: 08.05.89

(30) Priority: 11.05.88 GB 8811169

(43) Date of publication of application:
15.11.89 Bulletin 89/46

(84) Designated Contracting States:
AT DE ES FR GB IT

(71) Applicant: Lui, Sek Ki
Flat 2805, 28/F., Tai On House 57-87
Shaukiwan Road
Shaukiwan(HK)

(72) Inventor: Lui, Sek Ki
Flat 2805, 28/F., Tai On House 57-87
Shaukiwan Road
Shaukiwan(HK)

(74) Representative: SERJEANTS
25, The Crescent King Street
Leicester, LE1 6RX(GB)

(54) Camera with secondary picture producing device.

(57) A camera (10) with secondary imaging device for the creation of combination pictures on photographs taken with the camera, comprising a secondary film transparency (30) with a secondary image or picture (82) thereon, an optional slot (50) provided on the base of the camera (10) through which the secondary film may be inserted, and guide means (60,62) for the guiding of the insertion and removal of the secondary film transparency (30) into and from the camera, whereby the secondary film transparency (30) is adapted to abut against the surface of the primary unexposed film (16) facing the film gate (18) such that the secondary image or picture (82) is recorded on the primary film (16) on exposure.

FIG. 4

## CAMERA WITH SECONDARY PICTURE PRODUCING DEVICE

### Field of the Invention

The invention relates to a camera with a secondary imaging device for the creation of combination pictures on photographs taken with the camera.

### Background Art

Many types of combination processes are known and used to combine two or more images, pictures or photographs, at the negative or positive stage, to create special effects in photographs. However, the known techniques of photomontage are usually rather laborious and time consuming.

It is an object of the invention to provide a camera with a secondary imaging device for the production of combination pictures as photographs are actually taken with the camera, by a single exposure, thus avoiding the need to use the complicated and laborious technique of photomontage in the negative or positive such as cut-and-paste, enlarging or reducing, registering, masking and processing.

### Summary of the Invention

· The invention provides a camera provided with a secondary imaging device for the creation of combination pictures on photographs taken with the camera CHARACTERISED IN THAT the secondary imaging device comprises a secondary film transparency (30,40,70) with a secondary image (82) thereon, and the camera is provided with means (62,74) for holding the secondary film transparency (30,40,70) along its edges in the film gate (18) area in abutment with the surface of an unexposed primary film (16) in the camera such that the secondary image (82) is recorded on the primary film (16) on exposure.

In a preferred embodiment, the invention provides a camera with a secondary imaging device for the creation of combination pictures on photographs taken with the camera, comprising secondary film transparency film means with a secondary image or picture provided thereon at a first end portion thereof and a fingerhold portion at a second end portion thereof; a slot means provided on the main body of the camera through which the secondary film transparency may be inserted; a first guide means extending generally from the slot means and terminating generally at the lower edge of the film gate for guiding the movement of the secondary film means therealong, the plane of the first guide means being disposed at an angle with respect to the focal plane of the lens of the camera; and a second guide means extending generally from the first guide means and terminating generally at the upper edge of the film gate for guiding the movement of said secondary film means therealong, the plane of the second guide means being parallel to the focal plane of the lens of the camera; such that when the secondary film means is inserted into the camera through the slot means, the first end portion of the secondary film means slides along the first guide means, bends at the line of intersection of the plane of the first and second guide means and abuts against the surface of the primary unexposed film facing the film gate, such that the secondary image or picture is recorded on the primary film on exposure.

### Drawings

Specific embodiments of the invention will now be described by way of example with reference to the drawings of which:

Figure 1 is a rear view of a camera according to the invention with the camera back removed showing the mode of loading of standard 35 mm film from a cassette as well as the mode of insertion of a secondary sheet of film transparency from the base of the camera;

Figure 2 is a bottom view of the camera showing a slot provided on the base of the camera through which the secondary film transparency may be inserted;

Figure 3a is a first embodiment of the secondary film transparency;

Figure 3b is a second embodiment of the secondary film transparency;

Figure 4 is a diagrammatical vertical cross-section of a modification of the camera of Figure 1, showing alternative support means for the secondary film transparency;

Figure 5 is a third embodiment of the secondary film transparency;

Figure 6 is a diagrammatical partial horizontal cross-section showing the loading of standard 35 mm film from a cassette and the mounting of the secondary film transparency of Figure 5 to the film gate of camera;

Figure 7 is an explanatory diagram showing the principle of producing combination pictures in accordance with the present invention; and

Figure 8 is an explanatory diagram of a photograph showing the combined pictures thereon.

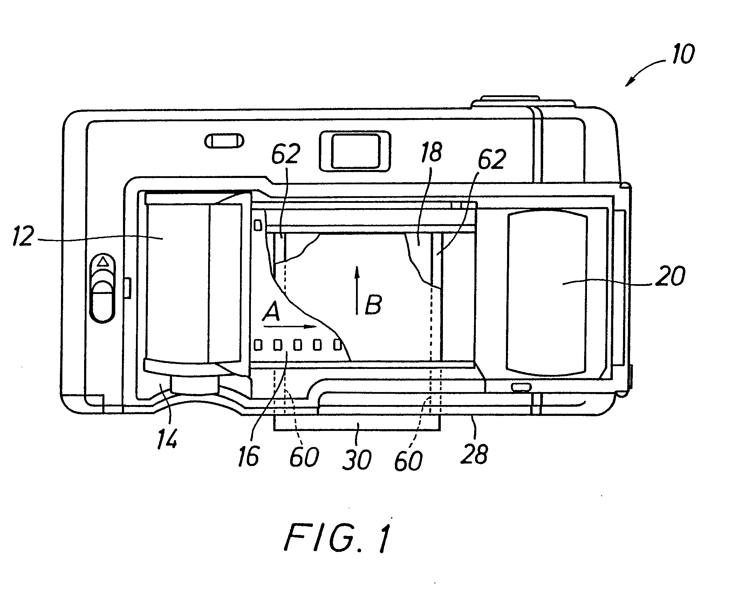

Referring now in more detail to the drawings, in which like reference numerals represent like parts throughout the several views, Figure 1 shows the rear view of a camera designated generally by reference numeral 10. The back cover of the camera 10 is removed to reveal the interior of the camera 10. A compact 35 mm camera is selected for illustration purposes only. It is understood that other types of camera may also apply.

A conventional 35 mm film cassette 12 is accommodated within a cassette chamber 14 in one side of the camera 10. The 35 mm film 16 is shown as having been drawn from the cassette 12, passing across a film gate 18 in a direction as indicated by arrow A, and being taken up by a take-up spool 20 mounted on the other side of the camera 10.

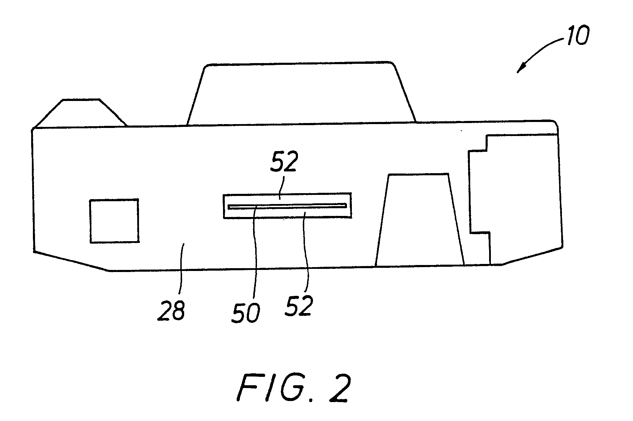

A secondary film transparency 30 is shown in Figure 1, having been loaded into the camera 10 in the direction of arrow B through an elongated slot 50 provided on the base 28 of the camera 10. This elongated slot 50 is shown in Figure 2.

The edges of the slot 50 are provided with a pair of black velvet lips 52,52 which serve the purposes of light-tightness and dust elimination. The lips 52 wrap around the edges of the slot 50 and extend some distance into the interior of the camera.

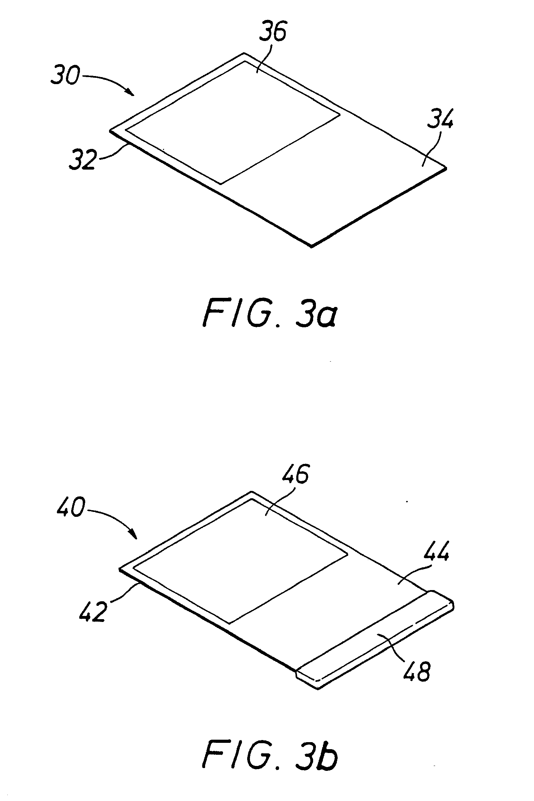

Figure 3a illustrates an embodiment of a secondary film transparency generally designated by reference numeral 30. This secondary film transparency 30, according to the present embodiment, takes the form of a rectangular film sheet preferably having a thickenss of less than 0.1 mm.

The secondary film transparency 30 has a first end portion 32 and a second end portion 34. A secondary image or picture 36 is provided on the first end portion 32 and is loaded into the camera 10 in an inverted and laterally reversed position conforming to the image of a subject as formed by the lens of the camera 10 on the focal plane thereof. The edge of the second end portion 34 defines a fingerhold portion to facilitate the insertion and removal of the sheet of film into and from the camera 10.

Figure 3b illustrates another embodiment of a secondary negative or film transparency which is generally represented by reference numeral 40. Similarly, a secondary image or picture 46 is provided on a first end portion 42 of the film 40. A fingerhold means 42 is attached to a second end portion 44 of the film 40 to facilitate the insertion and removal of the film 40 into and from the camera 10.

An indicating means, preferably in the form of an indicating arrow, may be provided on the film transparency 30 or 40 to indicate the direction of insertion.

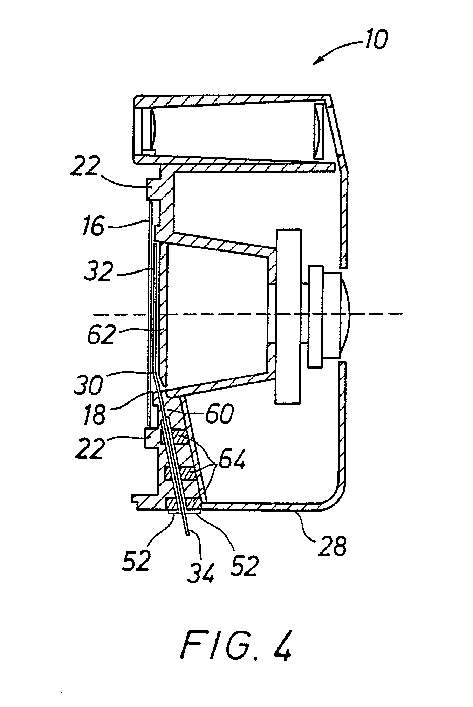

Figure 4 is a diagrammatical vertical cross-section of the camera 10 showing the inner structure thereof.

The primary or standard film 16 is being pressed, as is conventional, by a pressure plate (not shown) against the edges of the film gate 18 which defines as the focal plane of the lens of the camera 10. The film 16, being held in a flat position, is adapted to move along film guides 22.

Although it has been shown and described that the secondary sheet film transparency 30 or 40 is loaded from the base 28 of the camera 10 through the slot 50 provided therein, it is contemplated that the secondary film transparency may be loaded from any other suitable part or side of the camera without departing from the scope of the present invention.

A first pair of film guide rails (60,60) extending inwardly from respective ends of the slot 50 and terminating at the lower edge of the film gate 18, are used to guide the insertion of the secondary film transparency 30 into the camera 10, guiding it rearwardly at an angle with respect to the focal plane of the lens.

A second pair of film guide rails 62,62 extending from the first pair of film guide rails and terminating at the upper edge of the film gate 18, is provided as a pair of flanges formed integrally on the side edges of the film gate 18 to provide further guidance to the insertion of the secondary film transparency 30 into the camera 10. The first and second pairs of film guide rails each define a pair of extending stepped recesses in oppositely facing and parallel spaced relationship with each other along which the secondary film transparency slides, but the plane of the second pair of film guide rails 62,62 is parallel to the focal plane of the camera 10.

The secondary film transparency 30 or 40 may be loaded into the camera 10 through the slot 50 after the unexposed primary or standard film 16 is loaded into the camera 10, while the camera back is shut. Hence, the secondary film transparency 30 or 40 may be replaced after each exposure at the discretion of the user.

When the secondary film transparency 30 is inserted into the camera 10 through the slot 50, the first end portion 32 slides into and along the first pair of guide rails (60,60). As the sheet of film 30 reaches the second pair of guide rails 62,62, it bends generally at the line of intersection of the planes of the first and second guide rails and then slides into and along the second pair of guide rails 62,62. The flexible resilience of the secondary film transparency 30 causes the image portion 46 to abut against the surface of the standard film 16 facing the lens of the camera 10 in such a manner that the secondary film transparency 30 is superimposed over the standard film 16.

Alternative guide support means may be employed to suport and hold the sheet of film 30 in a fixed position relative to the camera 10. For example, shown in Figure 4 are soft support means in the form of three foam members 64 which support and hold the film 30 from both sides thereof. These foam members 64 are seated in recessed portions of the inner frame structure of the camera 10.

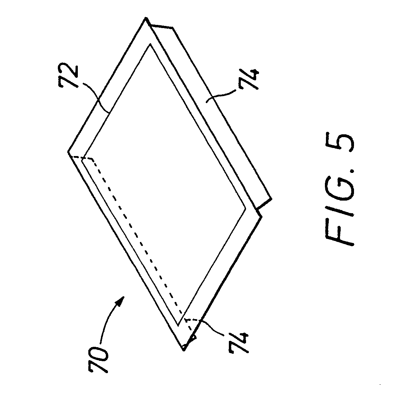

Figure 5 depicts a further embodiment of the secondary film transparency designated generally by reference numeral 70. A secondary image or picture 72, inverted and laterally reversed, is provided on the secondary film 70 at a generally central portion thereof. The secondary film 70 is adapted to be positioned at the film gate 18 by orientation means which takes the form of two leg portions 74,74 integrally provided on and depending downwardly from the sides of the secondary film transparency and able to fit over the edges of the film gate 18. Each leg portion 74 is slanted on the sides to conform to the slanted side walls extending from the film gate 18.

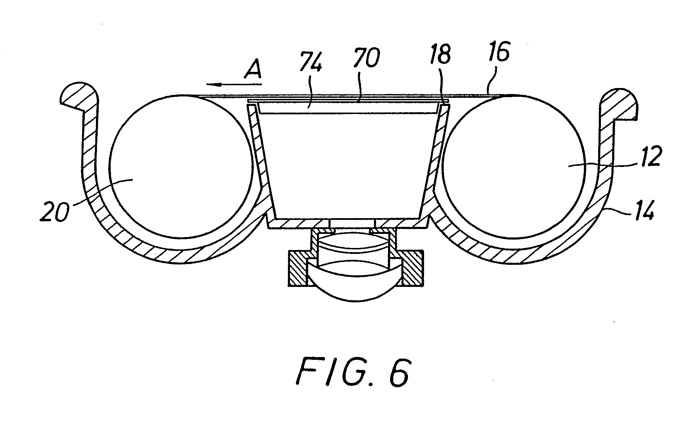

Figure 6 is a diagrammatical partial horizontal cross-section of a camera 10 illustrating the arrangement of and relationship between the standard film 16 and the secondary film transparency 70.

It can be seen from Figure 6 that the leg portions 74,74 of the secondary film transparency 70 abut against respective side edges of the film gate 18 in such a manner that sideward movement of the secondary film transparency 70 relative to the film gate 18 is restricted. In this embodiment, therefore, the secondary film transparency 70 is fitted over the edges of the film gate 18 before the standard film 16 is loaded. The standard film 16 is then pressed against the secondary film 70 by means of a conventional pressure plate (not shown).

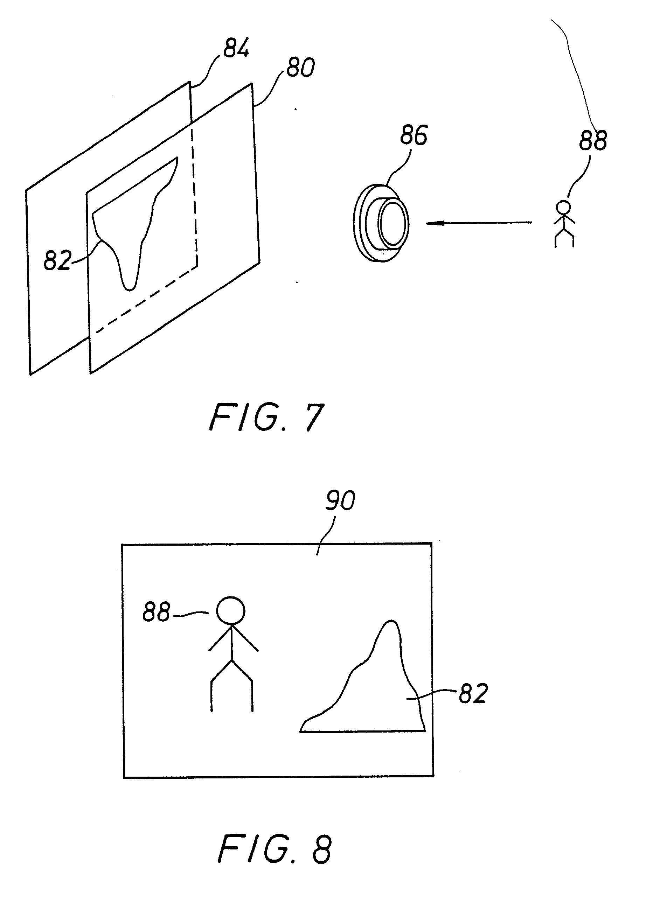

Figure 7 is an explanatory diagram explaining the principle of producing a secondary picture in accordance with the present invention.

A secondary film transparency 80, having a secondary image or picture 82 in an inverted and laterally reversed position thereon, is shown superimposed upon the surface of a standard film 84 facing the lens 86 of the camera. On exposure, the secondary image or picture 82 will be recorded on the standard film 84. A user aims the camera at a primary subject 88 delineating or framing the area to be recorded taking consideration of the composition of the secondary image or picture 82 which will also be recorded in the photograph during exposure.

Figure 8 is an explanatory diagram showing the combination of the primary subject 88 and the secondary picture 82 in a photograph 90 after a single exposure and development.

## Claims

1. A camera provided with a secondary imaging device for the creation of combination pictures on photographs taken with the camera CHARACTERISED IN THAT the secondary imaging device comprises a secondary film transparency (30,40,70) with a secondary image (82) thereon, and the camera is provided with means (62,74) for holding the secondary film transparency (30,40,70) along its edges in the film gate (18) area in abutment with the surface of an unexposed primary film (16) in the camera such that the secondary image (82) is recorded on the primary film (16) on exposure.

2. A camera according to claim 1, wherein the camera is provided with a slot (50) in a top, side or base wall thereof for insertion of the secondary film transparency (30,40); the secondary film transparency (30,40) comprises a handling portion (34,44) and a transparency portion (36) carrying the secondary image (82); and the holding means (62) comprise guide rails (62,62) for engaging opposite side edges (32,42) of the secondary film transparency (30,40) and guiding it into the film gate (18) area into abutment with the surface of an unexposed film (16) in the camera as the secondary film transparency (30,40) is pushed through the slot (50).

3. A camera according to claim 2, wherein the edges of the slot (50) are covered by black light-proof velvet (52).

4. A camera according to claim 2 or claim 3, wherein the handling portion (44) of the secondary film transparency (40) is provided with finger-hold means (48).

5. A camera according to any of claims 2 to 4, wherein the guide rails (62,62) comprise a first pair of guide rails (60,60) extending from the slot (50) to the lower edge of the film gate (18), inclined rearwardly at an angle to the focal plane of the camera lens; and a second pair of guide rails (62,62) extending from the first pair of guide rails to the upper edge of the film gate (18), in a plane parallel to the focal plane of the camera lens.

6. A camera according to claim 5, wherein the second pair of guide rails (62,62) comprises a pair of guide flanges formed on opposite side edges of the film gate (18).

7. A camera according to any of claims 2 to 6, further comprising means (64) for frictionally holding the secondary film transparency (30,40) in a fixed positon relative to the camera.

8. A camera according to claim 7, wherein the means (64) for frictionally holding the secondary film transparency (30,40) comprises foam members (64,64,64) along the first guide rails (60,60).

9. A camera according to claim 1, wherein the means (74) for holding the secondary film transparency (70) along its edges in the film gate (18) area comprises means (74) formed along edges of the secondary film transparency (70) for engaging opposite inside edges of the film gate (18) while the secondary film transparency (70) is held between the unexposed primary film (16) and the film gate (18) by a pressure plate of the camera.

FIG. 1

FIG. 2

*FIG. 3a*

*FIG. 3b*

FIG. 4

FIG. 5

EP 0 341 946 A2

*FIG. 6*

EP 0 341 946 A2

*FIG. 7*

*FIG. 8*